# EUROPEAN PATENT SPECIFICATION

(11) **EP 4 598 711 B1**
(45) Date of publication and mention of the grant of the patent: **09.12.2026**
(21) Application number: 23786343.6
(22) Date of filing: 04.10.2023
(51) Int. Cl.: B25J 5/00, B25J 5/04, B25J 11/00, B25J 9/02, G06Q 10/06, H05K 7/14

(54) **ROBOTIC APPARATUS FOR PERFORMING MAINTENANCE TASKS ON AN ELECTRONIC COMPONENT**
ROBOTERVORRICHTUNG ZUR DURCHFÜHRUNG VON WARTUNGSAUFGABEN AN EINEM ELEKTRONISCHEN BAUTEIL
APPAREIL ROBOTIQUE POUR EFFECTUER DES TÂCHES DE MAINTENANCE SUR UN COMPOSANT ÉLECTRONIQUE

(30) Priority: 04.10.2022 IT 202200020358
(43) Date of publication of application: 13.08.2025
(73) Proprietor: Fastweb S.p.A., 20139 Milano (IT); Bono, Alessandro, 22063 Cantù (CO) (IT)
(72) Inventor: BONO, Alessandro, 22063 Cantù (CO) (IT)
(74) Representative: Luppi Intellectual Property S.r.l.
(86) International application number: PCT/IB2023/059970
(87) International publication number: WO 2024/075041

(56) References cited:
- EP-A1- 4 000 821
- EP-A1- 4 039 617
- WO-A1-2022/090479
- CN-B- 111 123 453
- US-A1- 2020 081 439
- US-B2- 7 725 212

## Description

### Technical field

The invention relates to a robotic apparatus for performing maintenance tasks on an electronic component to be maintained in a workroom, such as a site dedicated to data processing, like for example a data centre, a computing centre, a server room, a service room for telecommunications, in particular a Point of Presence (PoP), i.e. a point of access to the network, etc.

Specifically but not exclusively, the apparatus of the present invention can perform maintenance tasks on supports for electronic components, like cabinets and/or racks, situated in the workroom and/or directly on an electronic component to be maintained.

Such supports for electronic components extend upwards, i.e. vertically, and comprise a plurality of housings for electronic components arranged alongside one another (or on top of one another), to which electronic components are fitted removably, such as memory cards, computing cards, connecting cards, etc. The supports for electronic components are arranged in the workroom and can be separated by service corridors that are accessible by a robotic apparatus and/or by an operator for maintenance tasks.

The maintenance tasks on the supports for electronic components can comprise by way of example assembly of electronic component, dismantling of electronic component, a connection to the electronic component, a diagnosis of the electronic component, etc.

### Background of the invention

From the patent literature, robotic apparatuses for performing maintenance tasks on a component to be maintained are known. Patent CN111123453B discloses an optical fiber distribution machine room maintenance system. WO2022090479A1 discloses an apparatus and a method for the positional interchange of IT hardware nodes at an IT hardware rack.

Patent application US2020081439A1 discloses a robot that operates on a component of a rack of a data centre comprising a frame and wheels. The robot comprises three gantry guides, a X-gantry guide (a cantilever arm), a Y-gantry guide (a bar) and a Z-gantry guide (a single column) to form a gantry that can move in three dimensions. On the X-gantry guide X, an articulation rod is arranged at the end of which a manipulator is present.

Patent US7725212B2 discloses a robotic vehicle that is movable on wheels comprising a base. One structure is fixed in a fixed manner in a vertical orientation above the base, the structure comprises a (single) channel arranged vertically therein to support a robotic extension arm mechanism. The arm mechanism can be controlled to move up and down, along and inside the channel. The arm mechanism comprises a first arm articulated into two joints that is connected by a spherical joint to a central part of a U-shaped element, each of the two branches of the U-shaped element is articulated by a joint and ends with a gripper.

In fact, the robotic apparatus in use exerts an operating force on the electronic component and/or on the support for electronic components on which the electronic component is installed. This occurs, for example, when the robotic apparatus extracts or inserts an electronic component from or into the support for electronic components.

The operating force that the robotic apparatus applies to the electronic component (and to the support for electronic components) oscillates the known robotic apparatus, making the maintenance task difficult or even overturning the robotic apparatus. This damages objects and/or a persons present in the workroom.

The robotic apparatus is moreover more instable the closer the centre of gravity of the robotic apparatus is to the perimeter of the movable base.

One drawback of known robotic apparatuses is that they are hardly stable. In fact, such apparatuses are equipped with elements that support the tool device that have relatively extended overhangs (towards the component to be maintained) that affect the positioning precision of the tool device with respect to the electronic component to be maintained. The poor precision in positioning the tool device prevents the success of the maintenance task and/or causes damage to the component to be maintained.

A further drawback of known robotic apparatuses is the relatively great overall dimensions of such apparatuses that makes difficult or prevents easy movement of such apparatuses between the supports for electronic components inside the workroom.

A further drawback is the constructional complexity of such known robotic apparatuses. In fact, such apparatuses comprise numerous parts that are subject to maintenance (due to wear, a fault, etc) resulting in poor efficiency of the robotic apparatus.

Another further drawback of the prior art is the poor flexibility of the known robotic apparatus when the maintenance task is changed, i.e. it is difficult to retool the robot to change a tool device, thus increasing the maintenance time on the electronic component. In fact, each robotic apparatus is specialized in a single (or in some cases) small number of maintenance tasks. The user is then forced to purchase several specialized robotic apparatuses to meet their maintenance needs.

### Summary of the invention

One object of the invention is improving the known robotic apparatuses for performing maintenance tasks on electronic components.

A further object is to provide a robotic apparatus that is able to overcome one or more of the aforesaid limits and drawbacks of the prior art.

A still further object is to provide an alternative robotic apparatus to those of the prior art.

Another further object is to make available a robotic apparatus that is stable during the maintenance tasks.

Another further object is to make available a compact robotic apparatus.

A further object of the invention is to provide a robotic apparatus that enables a tool device to be positioned precisely, in particular, during the maintenance tasks.

According to the invention, a robotic apparatus is provided as defined by the attached claims.

Owing to the invention, it is possible to optimize engineering of a robotic apparatus and increase the efficiency thereof in the maintenance tasks.

Owing to the invention, it is possible to provide a robotic apparatus that is able to adapt to different maintenance tasks.

Owing to the invention, it is possible make available a robotic apparatus that is able to move easily in a workroom.

### Short description of the drawings

The invention can be better understood and implemented with reference to the attached drawings that illustrate an embodiment thereof by way of non-limiting example, in which:
Figure 1 is a perspective view of a robotic apparatus arranged on a floor of a workroom in which supports for electronic components are provided;
Figure 2 is a perspective view of the robotic apparatus of Figure 1 that shows a tool support and movement device including a movement unit and a movable support unit;
Figure 3 is an enlargement of Figure 2 that shows the movement unit in a retracted configuration, in which some parts of the robotic apparatus are removed for greater clarity;
Figure 4 is an enlargement of Figure 2 that shows a movement unit to which a screwing device is fitted;
Figure 5 is an enlargement of Figure 2 that shows a movement unit to which an extracting device is fitted for extracting a connector;
Figure 6 is a rear view of the tool support and movement device of Figure 2 in which the movement unit is in the retracted configuration of Figure 3;
Figure 7 is a top plan view of the tool support and movement device of Figure 2 in which the movement unit is in the retracted configuration;
Figure 8 is a bottom view of the tool support and movement device of Figure 2 in which the movement unit is in the retracted configuration;
Figure 9 is a rear view of the tool support and movement device of Figure 2 in which the movement unit is in a work configuration;
Figure 10 is a top plan view of the tool support and movement device in the work configuration;
Figure 11 is a bottom view of the tool support and movement device in which the movement unit is in the work configuration;
Figure 12 is a perspective view of the tool support and movement device in which the movement unit is in the retracted configuration;
Figure 13 is a perspective view of the tool support and movement device in which the movement unit is in the work configuration;
Figure 14 is a side view of the tool support and movement device that shows the movement unit in the retracted configuration near the support for electronic components;
Figure 15 is a side view of the tool support and movement device that shows the movement unit in the work configuration near the support for electronic components;
Figure 16 is a perspective view of a robotic arm tool support and movement device in a further retracted configuration;
Figure 17 is a top plan view of the robotic arm tool support and movement device of Figure 16;
Figure 18 is a perspective view of the robotic arm tool support and movement device of Figure 16 in a further work configuration;
Figure 19 is a top plan view robotic arm tool support and movement device of Figure 16 in the further work configuration.

### Detailed description

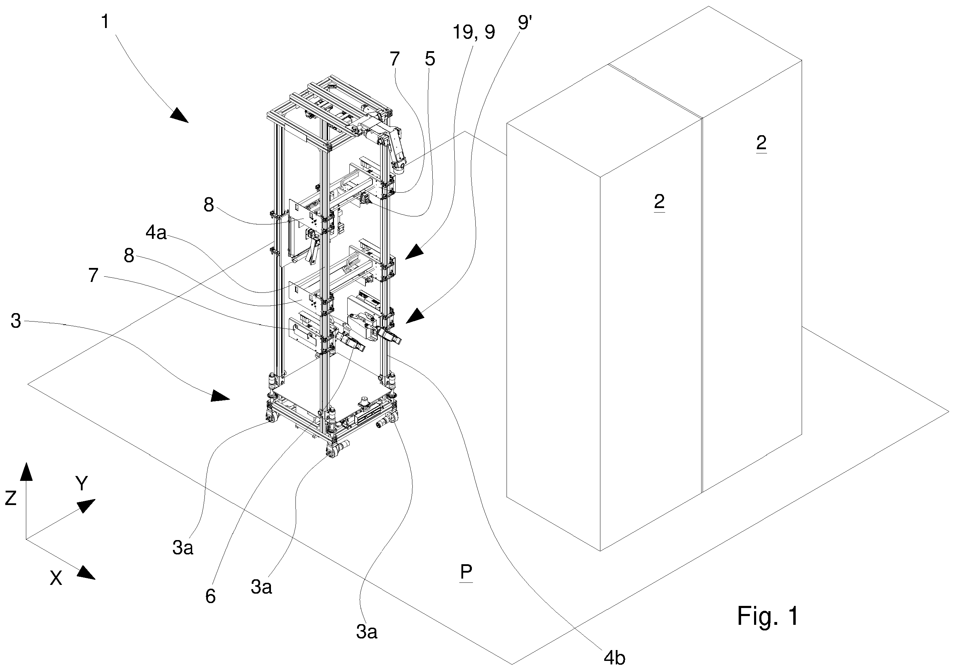

With reference to the aforementioned Figure 1, numeric reference 1 indicates a robotic apparatus for performing maintenance tasks on an electronic component 2a to be maintained in a workroom. The workroom can be used to house one or more supports for electronic components 2, like cabinets (cabinets and/or racks), equipped with electronic components. The electronic components 2a can comprise by way of non-exhaustive example: various electronic boards, communication cards, network cards (LAN, WAN, Wi-Fi, Bluetooth), memory cards for storing data (hard-disks, solid state memory devices SSD), central processing units and/or graphic processing units (CPU, GPU), connection interfaces between cards, communication cables (Ethernet cables, optic fibres), supply cables, connectors for cables (RJ-45, SC, LC, MTO, MTP), supply units, cooling devices, etc...

The workroom can comprise a data centre and/or a server room and/or a data processing centre and/or a service room for telecommunications, like for example a Point of Presence, or PoP, i.e. a point of access to the network, etc. The workroom is provided with a substantially horizontal floor P.

A set maintenance task can include an interaction of the robotic apparatus 1 with the electronic component 2a to be maintained, for example an inspection of the electronic component 2a, replacement and/or dismantling and/or assembly of the electronic component 2a in a support for electronic components 2, a supply or signal test of an electronic component 2a, a connection between the robotic apparatus 1 and the electronic component 2a to be maintained, etc.

The robotic apparatus 1 is configured to interact with the workroom. The robotic apparatus 1 is configured, in particular to move on the floor P of the workroom and interact with the support for electronic components 2 and/or directly with electronic components 2a. The robotic apparatus 1 extends mainly along a vertical axis Z that is, in use, transverse, in particular orthogonal, to the floor P.

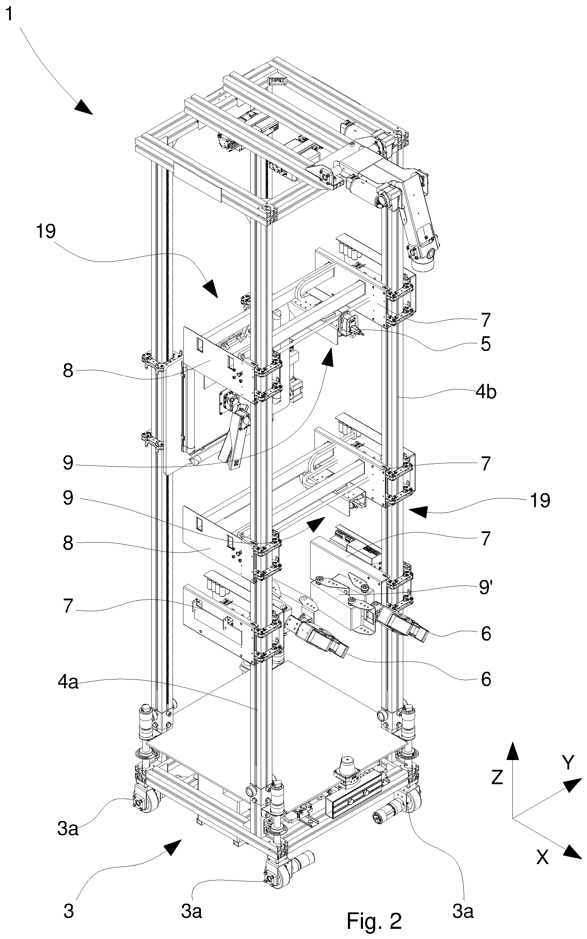

With reference to Figures 1 and 2, the support for electronic components 2 can have an overall parallelpipedon shape. A lower face of this parallelpipedon can rest (directly or indirectly) on the floor P of the workroom. In particular, the support for electronic components 2 is fixed (directly or indirectly) to a fixed part of the workroom, in particular to the floor P. With reference in particular to Figure 1, several supports for electronic components 2 arranged next to one another can be arranged inside the workroom. Such supports for electronic components 2 can be arranged adjacent to one another and/or distant from one another to bound one or more service corridors.

The support for electronic components 2 can be equipped with a wing or door on one or more faces of the parallelpipedon. The support for electronic components can comprise a rack provided with one or more shelves, i.e. with one or more housings for electronic components, to which the electronic components to be maintained 2a are fitted. The one or more shelves can be arranged stacked on one another between a lower height and an upper height along the vertical axis Z. In addition or alternatively, the one or more shelves can be arranged alongside one another transversely, in particular substantially orthogonally, to the axis Z.

The robotic apparatus 1 can be operated remotely, i.e. be drivable by a remote operator (for example far from the workroom L) by a remote connection for moving the robotic apparatus 1 in the workroom and for performing the set maintenance task.

The robotic apparatus 1 comprises a movable base 3 conformed to enable the robotic apparatus 1 to move on the floor P of the workroom to reach the support for electronic components 2. The movable base 3 can be provided with wheel units 3a that are rotatable and/or steerable.

The movable base 3 comprises a base frame of polygonal, in particular rectangular, shape (as in the illustrated embodiment). In the embodiment shown in Figures 1 and 2, the movable base 3 is provided with four (steering) wheels each of which is rotatable (and steerable). The movable base 3 can comprise electric supply means such as electric batteries to supply the various devices of the robotic apparatus 1.

The robotic apparatus 1 comprises at least one upright 4a, 4b that extends substantially vertically from the movable base 3, where "vertically" means with respect to the vertical axis Z.

The robotic apparatus 1 comprises, in particular, at least two uprights 4a, 4b that are placed alongside and spaced apart from one another. In the illustrated embodiment, two frontal uprights are indicated by the numerical references 4a and 4b, i.e. two uprights that, in use, or during the maintenance task, are both near, and face, the support for electronic components 2 (or equivalently the electronic component to be maintained 2a).

In the context of the invention, the terms "frontally", "frontal" and "to the rear", "rear" refer to the orientation of the robotic apparatus 1 with respect to the support for electronic component 2a and/or the support for electronic components 2. Also, in the context of the invention, the terms "above", "upper" and "below", "lower" mean with respect to the vertical axis Z.

In the illustrated embodiment, there are four uprights, each of which emerges from the movable base 3. In particular, the four uprights emerge from four vertex zones of the movable base 3 and are connected to a top portion of the robotic apparatus 1.

The robotic apparatus 1 comprises at least one tool device 5, 6 that is suitable for performing the set maintenance task on the electronic component to be maintained 2a and/or on the support for electronic components 2.

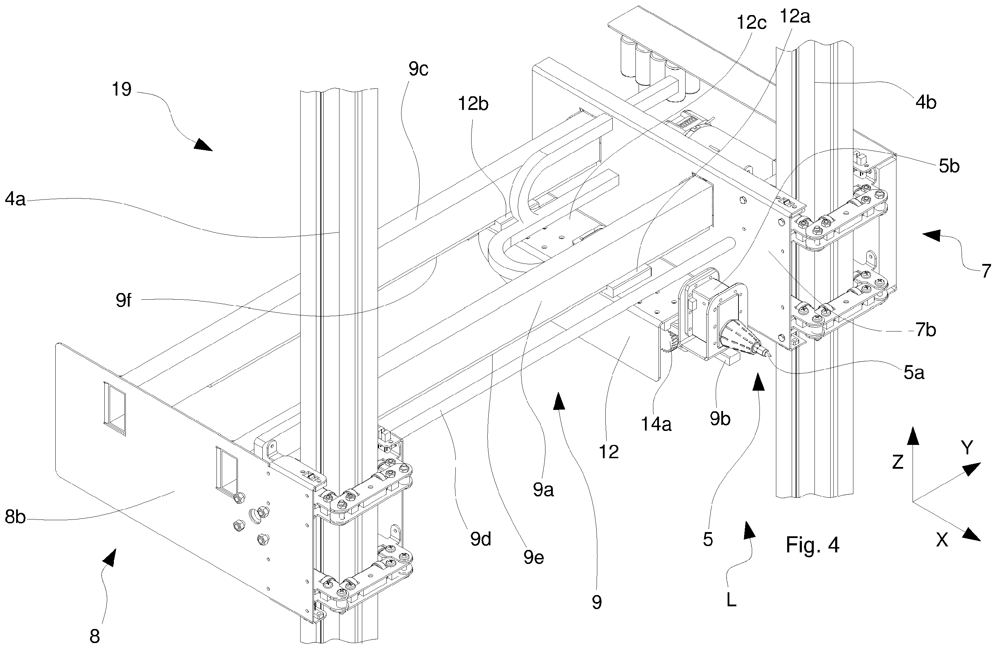

In the illustrated embodiment, for example in Figures 2 and 4, a screwing device indicated by numeric reference 5 is provided as a tool device. The screwing device 5 is arranged for tightening or loosening a fixing element (not shown), such as a screw element, on the electronic component 2a and/or on the support for electronic components 2. The screwing device 5 in particular, enables an electronic component 2a, for example an electronic board, to be fitted to and/or dismantled from the shelf and/or the support for electronic components 2. The screwing device 5 can comprise a tip of an interchangeable screwdriver 5a, in particular a tip of a screwdriver 5a that is selectable between the different types of screwdriver (cross, flathead, etc.). The tip of a screwdriver 5a can be coupled with a spindle that is rotatable by respective first motor drive means 5b (like for example an electric motor) included in the screwing device 5.

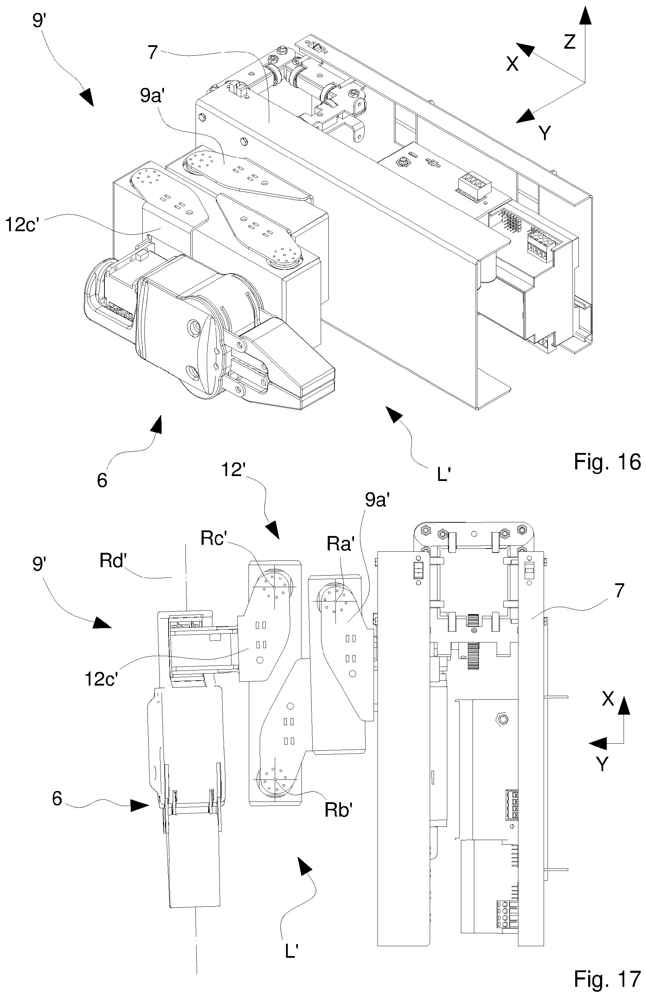

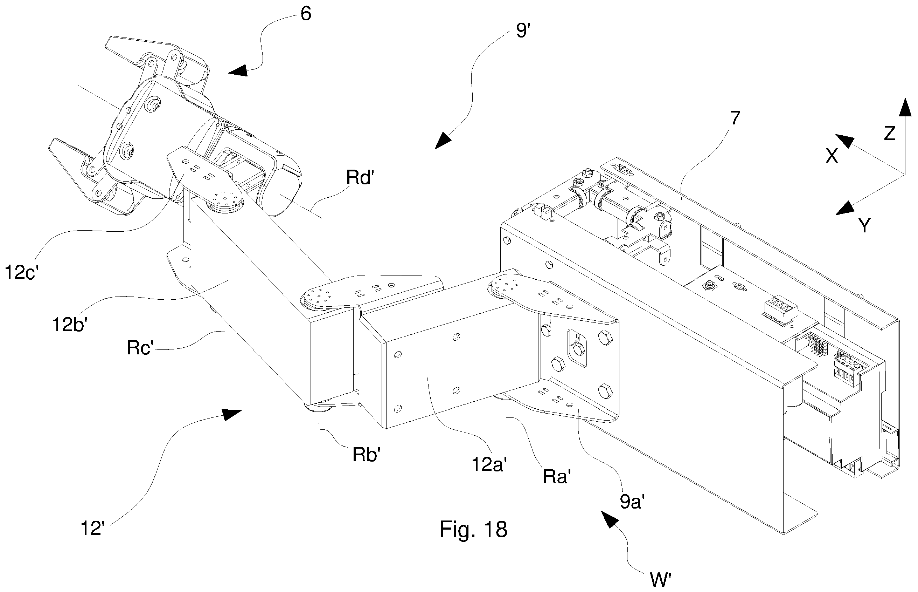

In the embodiment illustrated for example in Figures 2 and 18, a gripper device indicated by numeric reference 6 is provided as a tool device. The gripper device 6 can be arranged for grasping or releasing an object. The gripper device 6 enables in particular, by way of non-limiting example, a handle of the support for electronic components 2 to be gripped to access the electronic component 2a or to grasp an electronic component 2a or a part thereof, or a bunch of cables to be moved to access an electronic component 2a so as to facilitate the maintenance task. The gripper device 6 comprises (two) grasping elements that are movable towards or away from one another. The gripper device 6 comprises respective second motor means, such as one or more electric motors, for moving the grasping elements and/or for rotating together the grasping elements around a hinge axis Rd' (Figures 17 and 18).

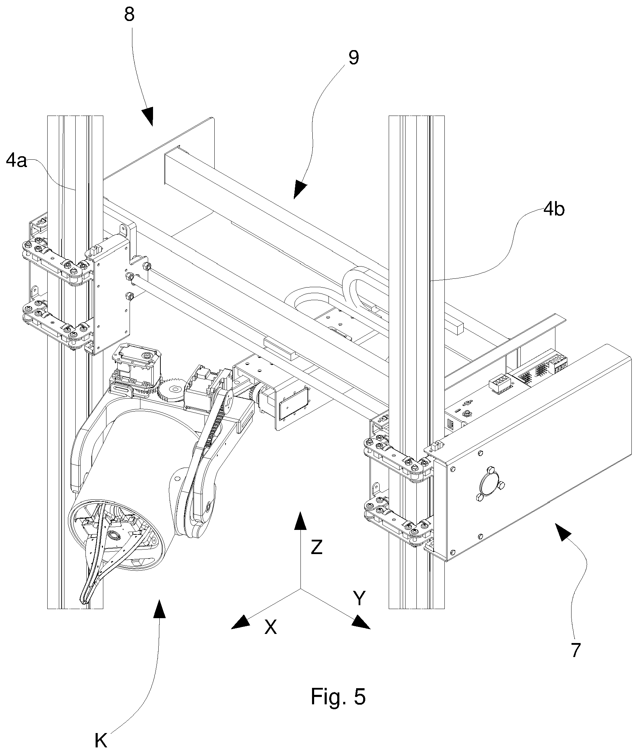

In the embodiment illustrated for example in Figure 5, an extracting device indicated by numeric reference K is provided as a tool device arranged for extracting a connector like for example a connector for cables, for example of type RJ-45 and/or SC and/or LC and/or MTO and/or MTP, from a communication port provided in the electronic component 2a and/or in the support for electronic components 2.

In addition or alternatively, the tool device 5, 6 can comprise a viewing device (not shown), like a camera, and/or a sucking device (not shown), such as a vacuum cleaner, arranged for removing powder from the electronic component 2a (for example from a communication port).

The robotic apparatus 1 comprises a tool support and movement device 19 including a movement unit 9 arranged for supporting the tool device 5, 6 and moving the tool device 5, 6 along at least two operating directions X, Y that are orthogonal to one another and transverse to the vertical axis Z. In addition to the movement unit 9, the tool support and movement device 19 include at least one movable support unit 7, 8 arranged for supporting the movement unit 9 and moving the movement unit 9 along the vertical axis Z. The at least two operating directions comprise an operating direction Y that is transverse, in particular orthogonal, to a further operating direction X that, in use, faces the electronic component to be maintained 2a and/or the support for electronic components 2.

The movable support unit 7, 8 is arranged for supporting the tool device 5, 6 and for moving the tool device 5, 6 vertically. The movable support unit 7, 8 is slidable along the at least one upright 4a, 4b to take the tool device 5, 6 to a desired height.

In the illustrated embodiment, a movable motor-driven support unit, i.e. a motor-driven movable support unit provided with respective third motor means such as an electric motor, to slide along a sole upright 4b is indicated by numeric reference 7. The motor-driven movable support unit 7 comprises a transmission element, like a toothed wheel, arranged for engaging a rack body positioned longitudinally on the upright 4b. A motor-driven movable support unit arranged for moving (vertically) together with a motor-driven movable support unit 7 is indicated by numeric reference 8. In this embodiment, the driven movable support unit 8 receives motion from a transmission shaft 9d connected to third drive means of the motor-driven movable support unit 7. A further transmission element is connected to the transmission shaft 9d, like a further toothed wheel, arranged for engaging a further rack body positioned longitudinally on the upright 4a. In this embodiment, the driven movable support unit 8 is slidable on another upright 4a (not on the same upright 4b), obviously alternatively - the position (or the upright) of the two movable support units 7, 8 can be exchanged - without difficulty for an expert person. In a further alternative embodiment that is not illustrated, the two movable support units 7, 8 can both be motor-driven.

In other words, in the robotic apparatus 1 of the illustrated embodiment, two uprights 4a, 4b and two support units 7, 8 are provided (one of which is motor-driven in the illustrated embodiment) that are fitted slidingly with respect to the two uprights 4a, 4b.

In one or more embodiments that are not illustrated, the two movable support units 7, 8 can be fitted to two side uprights or to two rear uprights or to two diagonal uprights.

The support units 7, 8 are in particular removably fitted on the uprights 4a, 4b. In fact, each movable support unit 7, 8 comprises a coupling portion 7a, 8a arranged for connecting the tool support and movement device 19 to the uprights 4a, 4b. The coupling portion 7a, 8a enables the robotic apparatus 1 to be equipped with one or more support and movement devices 19. In Figures 1 and 2, two tool support and movement devices 19 arranged vertically on one another are shown.

In the embodiment illustrated in Figures 1 and 2, a movement unit of two-axis Cartesian type is indicated by numeric reference 9.

Each movement unit 9 comprises respective drive means 10, 11 for moving the at least one tool device 5, 6 along the at least two operating directions X, Y.

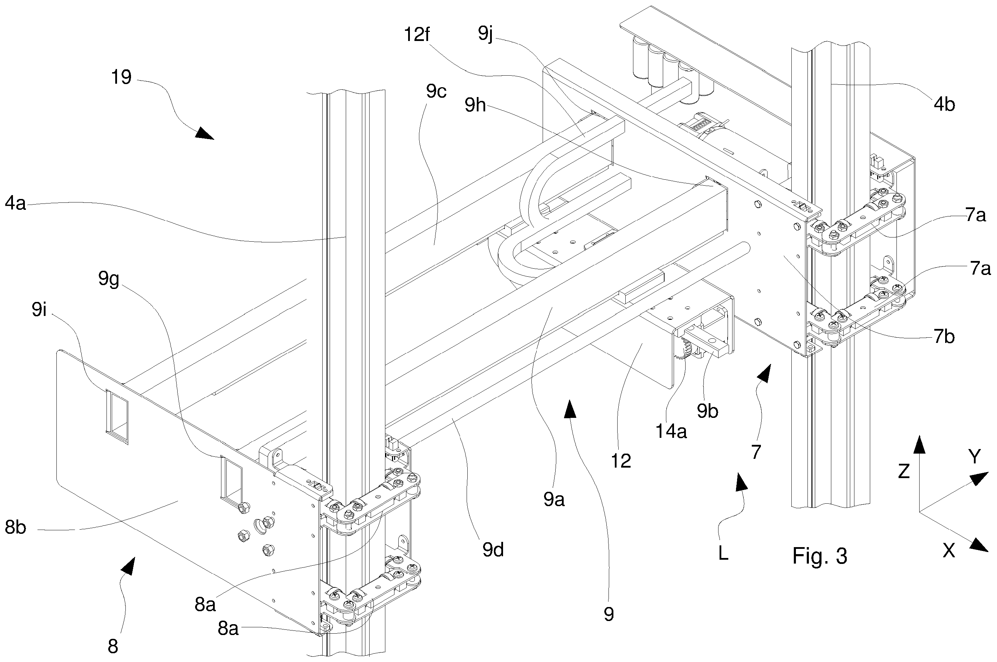

The movement unit 9 can comprise a guide part 9a fixed to the movable support unit 7, 8 and a movable tool movement body 12 that is movable with respect to the guide part 9a to move the tool device 5, 6 along the operating direction Y. In particular, the movable tool movement body 12 is slidable with respect to the guide part 9a. In particular the guide part 9a is fixed at fixing parts 7b, 8b (Figure 3) of the movable support units 7, 8. In the illustrated embodiment, the fixing parts 7b, 8b are plate-shaped.

In the illustrated embodiment, the movable tool movement body 12 comprises a carriage or a pad. In the illustrated embodiment, the movable tool movement body 12 hangs on the guide part 9a. In one embodiment that is not illustrated, the movable tool movement body can be rested on the guide part and slide thereupon. In a further embodiment that is not illustrated, the movable tool movement body can be traversed by the guide part.

The guide part 9a can comprise an elongated body that extends longitudinally along the operating direction Y.

The drive means 10, 11 comprises first drive means 10 that is fitted to the movable tool movement body 12 and is configured to drive the tool movement body 12. In particular, the first drive means 10 can comprise an electric motor. This electric motor is controllable electronically. Accordingly, the first drive means 10 is fitted on the movement unit 9 to move the movement unit 9 along the operating direction Y transverse to the further operating direction X within a space defined between the two uprights 4a; 4b.

The guide part 9a is fixed at end portions 9g, 9h thereof to the movable support units 7, 8 respectively. In particular, one or more welds can be provided that connect the end portions 9g, 9h to a portion of the movable support unit 7, 8. In one embodiment that is not illustrated, it is possible to provide a bolted connection between the guide part 9 a and the movable support units 7, 8. In a further embodiment that is not illustrated, it is possible for the guide part 9a to be a single piece with the movable support units 7, 8.

With reference to the embodiment illustrated in Figure 3, an end portion 9h of the guide part 9a is connected to the motor-driven movable support unit 7 at another end portion 9g on the driven movable support unit 8. In this embodiment, the motor-driven movable support unit 7 and the driven movable support unit 8 are substantially at the same height. As mentioned, in one embodiment that is not illustrated of the tool support and movement device 19, the ends of the guide part can be connected to two movable support units that are both motor-driven.

In this embodiment, a further guide part 9c can be provided that comprises a further elongated body and extends substantially parallel to the guide part 9a (and is arranged further back than the latter along the further operating direction X). Also the end portions 9i, 9j of the further guide part 9c are fixed to the two movable support units 7, 8 respectively.

The further guide part 9c enables, in particular, the structural stiffness of the tool support and movement device 9 and thus the precision of the movements in use of the tool device 5, 6 to be improved.

In the illustrated embodiment, the movable tool movement body 12 is slidable on the guide part 9a and in particular also on the further guide part 9c, along the operating direction Y.

The movement unit 9 comprises a movable tool support element 9b that is movable along the further operating direction X with respect to the movable tool movement body 12 so as to move the tool device 5, 6 along the further operating direction X to move, in use, the tool device 5, 6 towards and/or away from the electronic component 2a to be maintained and/or the support for electronic components 2. The movable tool support element 9b is fitted slidably to the movable tool movement body 12.

The movable tool support element 9b comprises an elongated element that extends longitudinally along the further operating direction X. In the embodiment shown, the movable tool support element 9b is a perforated rod. The tool device 5, 6 can be connected to the movable tool support element 9b by removable connecting means, such as a bolted connection or an interference connection.

The drive means 10, 11 comprises second drive means 11 that is fitted to the movable tool movement body 12 and is configured to drive the movable tool support element 9b. In particular the second drive means 11 can comprise a further electric motor. This further electric motor is controllable electronically.

The drive means 10, 11 is supplied by supply cables 12f (Figure 3) that carries the supply from the movable support means 7, 8. The supply cables can be housed in a cable chain or duct. The supply cables 12f are connected to a sliding terminal (not shown) configured to slide on one or more elongated conducting elements positioned longitudinally on one of the uprights 4a, 4b. The one or more elongated conducting elements are connected operationally to the supply means provided in the movable base 3. In the illustrated embodiment, the sliding terminal is integrated into the motor-driven support unit 7.

The movement unit 9 is provided with first guiding and retaining means 9e, 12a, 9f, 12b for guiding the movable tool movement body 12 along the operating direction Y and retaining vertically the movable tool movement body 12 with respect to the guide part 9a (and to the further guide part 9c). The movable tool movement body 12 is thus supported from above and thus hung on the first guiding and retaining means 9e, 12a, 9f, 12b.

The first guiding and retaining means can be provided with at least one cursor, or at least one slide 12a, 12b arranged, in particular fixed, to the movable tool movement body 12. The at least one slide 12a, 12b is arranged for coupling slidably with at least one guide surface 9e, 9f positioned on the guide part 9a and/or on the further guide part 9c. The at least one slide 12a, 12b can be positioned at an upper surface 12c of the movable tool movement body 12. The first guiding and retaining means can comprise a dovetail sliding mechanism.

In the embodiment illustrated for example in Figure 4, two slides 12a, 12b are provided arranged for coupling slidingly with two respective guide surfaces 9e, 9f. A first guide surface 9e is arranged below the guide part 9a, a second guide surface 9f is arranged below the further guide part 9c.

The movement unit 9 comprises first transmitting means 13 for transmitting a movement from the first drive means 10 to the guide part 9a along the operating direction Y. The first transmitting means 13 comprises a toothed wheel element 13a engaging a rack element 13b.

In the illustrated embodiment, the rack element 13b is arranged longitudinally to the guide part 9a, in particular behind the guide part 9a. In one embodiment that is not illustrated, the rack element can be arranged, in addition or alternatively, on the further guide part 9c and/or according to a different orientation (for example in the front of or above or below the guide part and/or the further guide part). In one embodiment that is not illustrated, the first transmitting means 13 can comprise a screw-nut screw sliding mechanism.

The movement unit 9 comprises second transmission means 14 for transmitting a movement from the second drive means 11 to the movable tool support element 9b. The second transmission means 14 comprises a further toothed wheel element 14a engaging a further rack element 14b. In one embodiment that is not illustrated, the second transmission means 14 can comprise a screw-nut screw sliding mechanism.

The movement unit 9 is provided with second guiding and retaining means 12d, 12e for guiding the movable tool movement body 12 along the operating direction Y and retaining vertically the movable tool support element 9b with respect to the movable tool movement body 12. The movable tool support element 9b is thus supported from above and thus hung on the second guiding and retaining means 12d, 12e.

The second guiding and retaining means can be provided with at least one further cursor, or at least one further slide 12d, 12e arranged, in particular fixed, to the movable tool movement body 12. The at least one further slide 12d, 12e is arranged for coupling slidably with at least one further guide surface obtained longitudinally on the movable tool support element 9b. The second guiding and retaining means can comprise a further dovetailed sliding mechanism.

In the embodiment illustrated in Figure 4, two further slides 12d, 12e are provided arranged for coupling slidingly with the further guide surface (or with the movable tool support element 9b).

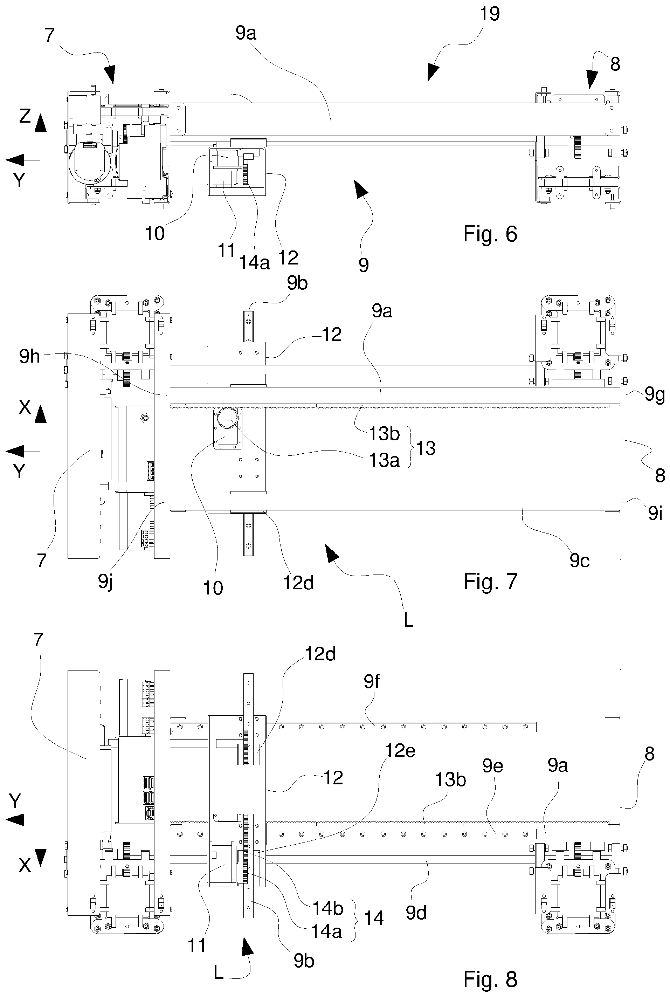

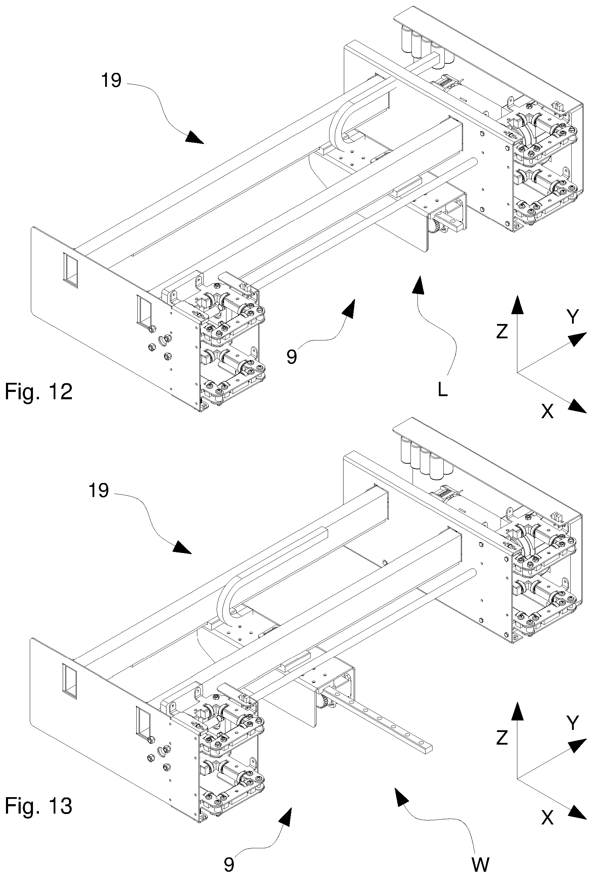

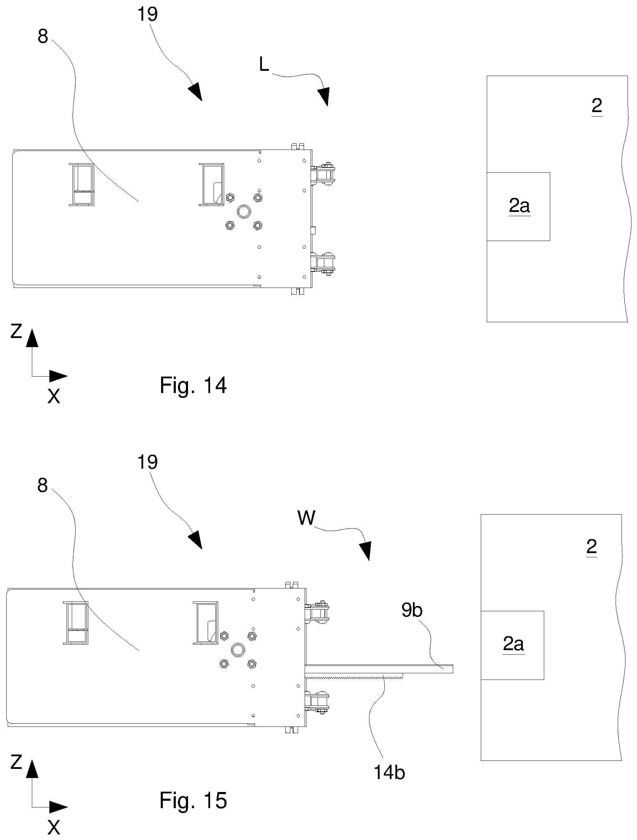

In Figures 3, 4, 6, 7, 8, 12 and 14 the movement unit 9 is in a rest configuration, or retracted configuration L, in which the movable tool support element 9b is near the movable tool movement body 12 and, in use, far from the electronic component to be maintained 2a and/or from the support for electronic components 2 (Figure 14).

In the retracted configuration L, the movable tool support element 9b is arranged between the two uprights 4a, 4b and can occupy a minimum space. In particular, in the retracted configuration L the movement unit 9 is contained projecting along the vertical axis Z in the movable base 3. The retracted configuration L can be adopted when the robotic apparatus 1 moves on the floor P or when the robotic apparatus 1 is not active, i.e. when the robotic apparatus 1 is not performing maintenance tasks or is recharging.

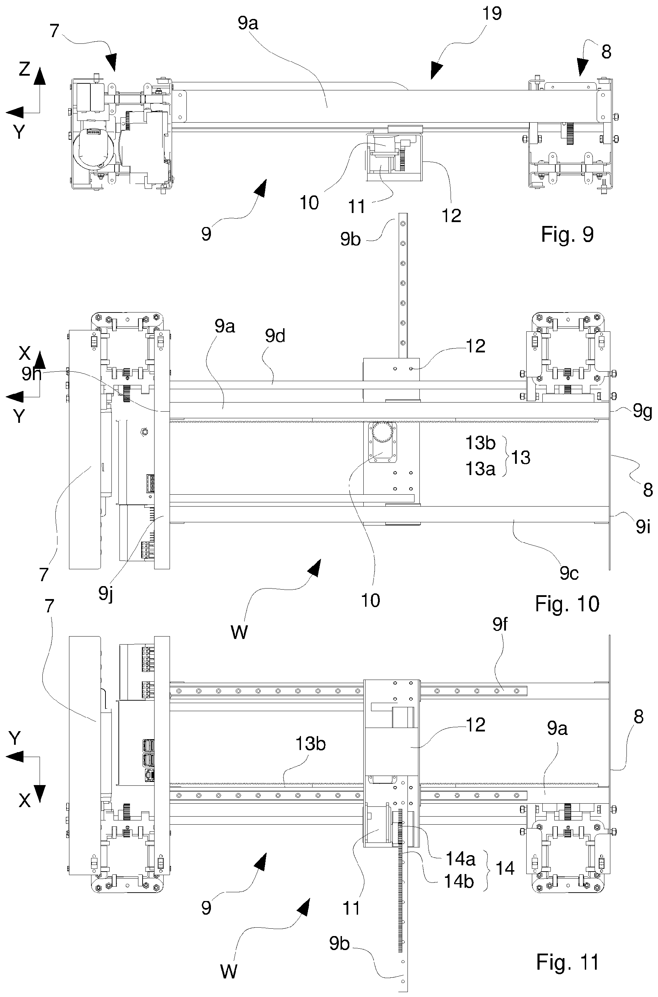

In Figures 9, 10, 11, 13 and 15, the movable tool support element 9b is in a work configuration W in which the movable tool support element 9b is further from the movable tool movement body 12 and, in use, nearer the electronic component to be maintained 2a and/or the support for electronic components 2 (Figure 15). The work configuration W can be adopted for example when the robotic apparatus 1 performs a maintenance task.

In the embodiment illustrated in Figures 1 and 2, a robotic arm tool support and movement device that comprises a robotic arm device and a movable support unit 7 is indicated by numeric reference 9'. In particular, the robotic arm device 9' is fitted to a single (motor-driven) movable support device 7 that is slidable on a single upright 4a (or 4b).

In the robotic arm device 9', an articulated arm 12' is fitted rotatably to the movable support unit 7 at a fixed part 9a'. The fixed part 9a' comprises a bracket element that is fixed to the movable support unit 7.

The articulated arm 12' includes a plurality of arms 12a', 12b', 12c' connected rotatably to one another. In the illustrated embodiment, the articulated arm 12' is articulated into three arms. In one or more embodiments that are not illustrated, the articulated arm can be articulated into a single arm, or into two arms, or into four (or more) arms.

Each arm 12a', 12b', 12c' of the plurality of arms 12a', 12b', 12c' is rotatable with respect to its rotation axis Ra', Rb', Rc'. Each rotation axis Ra', Rb', Rc' is substantially parallel to the vertical axis Z so that the articulated arm 12' can rotate overall in a reference plane that is transverse, in particular orthogonal, to the vertical axis Z.

In the illustrated embodiment, the plurality of arms 12a', 12b', 12c' comprises a proximal arm 12a' that is rotatable with respect to the fixed part 9a' around a first rotation axis Ra', a middle arm 12b' rotatable around the proximal arm 12a' around a second rotation axis Rb', and a distal arm 12c' rotatable around the middle arm 12b' (and the proximal arm 12a') around a third rotation axis Rc'.

The robotic arm device 9' comprises for each arm 12a', 12b', 12c' respective fourth drive means for rotating each arm 12a', 12b', 12c' around its rotation axis Ra', Rb', Rc'. The rotation axes Ra', Rb', Rc' are substantially parallel to one another.

The gripper device 6 can be provided at one end of the articulated arm 12', in particular at the distal arm 12c'.

The articulated arm 12' can adopt a further rest configuration, or further retracted configuration L', in which the plurality of arms 12a', 12b', 12c' is folded on itself (Figures 16 and 17) and in which the arms 12a', 12b', 12c' are near one another. In the further retracted configuration L', the articulated arm 12' is arranged between the two uprights 4a, 4b and can occupy a minimum space. In particular, in the further retracted configuration L' the robotic arm device 9' is contained projecting along the vertical axis Z in the movable base 3. The further retracted configuration L' can be adopted when the robotic apparatus 1 moves on the floor P or when the robotic apparatus 1 is not active, i.e. when it is not performing maintenance tasks or is recharging.

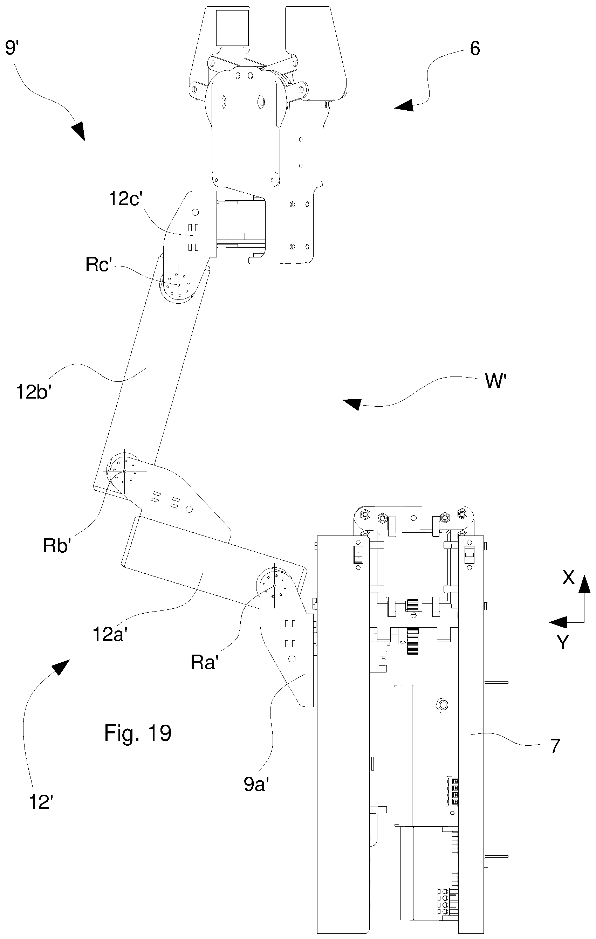

The articulated arm 12' can adopt a further work configuration W' in which the plurality of arms 12a', 12b', 12c' is extended (Figures 18 and 19) and in which the arms 12a', 12b', 12c' are far from one another. In particular, in the further work configuration W' the arms 12a', 12b', 12c' are further from one another than the retracted configuration L'. The further work configuration W' can be adopted for example when the robotic apparatus 1 performs a maintenance task.

Integrating the movement means 10, 11 into the movable tool movement body 12 enables the distribution of the weight of the tool support and movement device 19 to be optimized and thus the overall stability of the robotic apparatus 1 to be improved.

Further, the arrangement of the tool support and movement device 19 according to the invention enables the robotic apparatus 1 to be compact and stable. In fact, the most extended (and heaviest) part of the tool support and movement device 19, i.e. the guide part 9a and the movable tool movement body 12, is contained in the movable base 3 (considering a projection of the tool support and movement device 19 on the movable base 3 along the vertical axis Z). This enables the centre of gravity of the robotic apparatus 1 to be brought near a central zone of the movable base 3, improving the stability and equilibrium of the robotic apparatus 1, in particular in the maintenance tasks and/or during movement of the robotic apparatus 1 on the floor P. The same result is also obtained thanks to the arrangement of the tool movement unit 9 between the two uprights 4a, 4b.

Further, in the work configuration W, the extent along the further operating direction X of the movable tool support element 9b (or equivalently the overhang of the respective tool device 5, 6) with respect to the movable support unit 7, 8 is relatively reduced. This contributes to containing the mechanical stress in the tool support and movement device 19, improving the stability of the movable tool support element 9b and the consequent positioning precision of the tool device 5, 6.

The compactness of the tool support and movement device 19 - which contributes to the overall compactness of the robotic apparatus 1 facilitates moving the robotic apparatus 1 between relatively narrow corridors of the workroom.

Further, the tool support and movement device 19, owing to the possibility of easily fitting the support units 7, 8 to and dismantling the support units 7, 8 from the uprights 4a, 4b of the robotic apparatus 1, improves the flexibility of the robotic apparatus 1 in changing maintenance task. In fact, it is easy to retool the robotic apparatus to replace a tool support and movement device 19 provided with a specific tool device. Further, it is easy for a user to equip the robotic apparatus 1 with several (for example two) tool support and movement devices 19 so as to be able to perform several maintenance tasks, for example with a screwing device 5 and with an extracting device K (as shown in Figure 5). This enables a user to purchase only tool support and movement devices 19 to meet the maintenance needs of the user without the user having to buy complete robotic apparatuses.

Despite this, the arrangement of the guide part 9a and of the further guide part 9c give the structure of the tool support and movement device 19 relatively great stiffness, contributing to precise positioning of the tool device 5, 6, in particular, during the maintenance tasks.

## Claims

1. Robotic apparatus (1) for performing maintenance tasks on an electronic component to be maintained (2a), said electronic component to be maintained (2a) being fitted to a support for electronic components (2) arranged in a workroom, said robotic apparatus (1) comprising:
- a movable base (3) shaped to enable said robotic apparatus (1) to move on a floor (P) of said workroom to reach said support for electronic components (2),
- at least two uprights (4a; 4b) extending substantially vertically from said movable base (3), where "vertically" is intended with respect to a vertical axis (Z) which is, in use, substantially orthogonal to said floor (P),
- at least one tool device (5; 6) suitable for performing a set maintenance task on said electronic component (2a) and/or on said support for electronic components (2),
- at least one tool support and movement device (19) supporting a movement unit (9), arranged for supporting and moving said at least one tool device (5; 6) along a first operating direction (X) transverse to said vertical axis (Z) between a retracted configuration (L), in which said tool device (5; 6), in use, is further from said electronic component to be maintained (2a), and a work configuration (W), in which said tool device (5; 6), in use, is nearer said electronic component to be maintained (2a), and including a movable support unit (7, 8) for each of said two uprights (4a; 4b) arranged for supporting and moving said tool support and movement device (19) along said vertical axis (Z), said movable support unit (7; 8) being slidable along a respective upright of said two uprights (4a; 4b) to take said tool support and movement device (19) to a desired height,
wherein first drive means (10) are fitted on board said movement unit (9) to move said movement unit (9) along a second operating direction (Y) transverse to said first operating direction (X) within a space defined between said two uprights (4a; 4b).

2. Robotic apparatus (1) according to claim 1, wherein said movement unit (9) comprises a guide part (9a) fixed to each movable support unit (7; 8) and a movable tool movement body (12) that is movable with respect to said guide part (9a) to move said at least one tool device (5; 6) along said second operating direction (Y).

3. Robotic apparatus (1) according to claim 2, wherein said guide part (9a) comprises an elongated body that extends longitudinally along said second operating direction (Y).

4. Robotic apparatus (1) according to claim 2 or 3, wherein said movable tool movement body (12) is slidable on said guide part (9a).

5. Robotic apparatus (1) according to any one of claims 2 to 4, wherein said first drive means (10) is fitted to said movable tool movement body (12) and configured to drive said movable tool movement body (12).

6. Robotic apparatus (1) according to any one of claims 2 to 5, wherein said movement unit (9) comprises a movable tool support element (9b) that is movable along said first operating direction (X) with respect to said movable tool movement body (12) to move said at least one tool device (5; 6) along said first operating direction (X) to bring and/or move in use said at least one tool device (5; 6) to and/or from the electronic component to be maintained (2a) and/or the support for electronic components (2).

7. Robotic apparatus (1) according to claim 6, wherein said movable tool support element (9b) comprises an elongated element that extends longitudinally along said first operating direction (X).

8. Robotic apparatus (1) according to claim 6 or 7, wherein said movable tool support element (9b) is fitted slidably to said movable tool movement body (12).

9. Robotic apparatus (1) according to one of claims 6 to 8, wherein second driving means (11) is fitted to said movable tool movement body (12) and configured to drive said movable tool support element (9b).

10. Robotic apparatus (1) according to any one of claims 2 to 9, wherein said at least two uprights (4a; 4b) are alongside and spaced apart from one another, said guide part (9a) being fixed at end portions thereof (9g, 9h) to each movable support unit (7, 8) respectively.

11. Robotic apparatus (1) according to claim 10, wherein only one of two movable support units (7, 8) is motor-driven.

12. Robotic apparatus (1) according to claim 11, wherein said movement unit (9) comprises a further guide part (9c) that extends substantially parallel to said guide part (9a), further end portions (9i, 9j) of said further guide part (9c) being fixed to each movable support unit (7, 8) respectively, said further guide part (9c) comprising a further elongated body.

13. Robotic apparatus (1) according to any one of claims 2 to 12, wherein said movement unit (9) comprises first guiding and retaining means (9e, 12a; 9f, 12b) configured to guide said movable tool movement body (12) along said operating direction (Y) and retain vertically said movable tool movement body (12) with respect to a said guide part (9a).

14. Robotic apparatus (1) according to claim 6 or according to one of claims 7 to 13 as appended to claim 6, wherein said movement unit (9) comprises second guiding and retaining means (12d, 12e) configured to guide said movable tool support element (9b) along said further operating direction (X) and retain vertically said movable tool support element (9b) with respect to said movable tool movement body (12).

15. Robotic apparatus (1) according to any preceding claim, wherein said at least one tool device (5; 6) comprises a screwing device (5) and/or an extracting device (K) to extract a connector and/or a viewing device and/or a sucking device for sucking the dust from said electronic component to be maintained (2a) and/or a gripping device (6) for grasping an object in said workroom and/or said electronic component to be maintained (2a).

## Patentansprüche

1. Robotereinrichtung (1) zum Durchführen von Wartungsaufgaben an einem zu wartenden elektronischen Bauteil (2a), wobei das zu wartende elektronische Bauteil (2a) an einem Träger für elektronische Bauteile (2) angebracht ist, der in einem Arbeitsraum angeordnet ist, wobei die Robotereinrichtung (1) umfasst:
- eine bewegliche Basis (3), die so geformt ist, dass sie es der Robotereinrichtung (1) ermöglicht, sich auf einem Boden (P) des Arbeitsraums zu bewegen, um den Träger für elektronische Bauteile (2) zu erreichen,
- mindestens zwei Ständer (4a; 4b), die sich im Wesentlichen vertikal von der beweglichen Basis (3) erstrecken, wobei "vertikal" in Bezug auf eine vertikale Achse (Z) zu verstehen ist, die im Gebrauch im Wesentlichen orthogonal zum Boden (P) ist,
- mindestens eine Werkzeugvorrichtung (5; 6), die zum Durchführen einer festgelegten Wartungsaufgabe an dem elektronischen Bauteil (2a) und/oder an dem Träger für elektronische Bauteile (2) geeignet ist,
- mindestens eine Werkzeugträger- und -Bewegungsvorrichtung (19), die eine Bewegungseinheit (9) trägt, die zum Tragen und Bewegen der mindestens einen Werkzeugvorrichtung (5; 6) entlang einer ersten Arbeitsrichtung (X) quer zu der vertikalen Achse (Z) zwischen einer eingefahrenen Konfiguration (L), in der die Werkzeugvorrichtung (5; 6) im Gebrauch weiter von dem zu wartenden elektronischen Bauteil (2a) entfernt ist, und einer Arbeitskonfiguration (W), in der sich die Werkzeugvorrichtung (5; 6) im Gebrauch näher an dem zu wartenden elektronischen Bauteil (2a) befindet, angeordnet ist, und die eine bewegliche Trägereinheit (7, 8) für jeden der beiden Ständer (4a; 4b) einschließt, die zum Tragen und Bewegen der Werkzeugträger- und Bewegungsvorrichtung (19) entlang der vertikalen Achse (Z) angeordnet ist, wobei die bewegliche Trägereinheit (7; 8) entlang eines jeweiligen Ständers der beiden Ständer (4a; 4b) verschiebbar ist, um die Werkzeugträger- und Bewegungsvorrichtung (19) auf eine gewünschte Höhe zu bringen,
wobei erste Antriebsmittel (10) an der Bewegungseinheit (9) angebracht sind, um die Bewegungseinheit (9) entlang einer zweiten Arbeitsrichtung (Y) quer zu der ersten Arbeitsrichtung (X) innerhalb eines zwischen den beiden Ständern (4a; 4b) definierten Raums zu bewegen.

2. Robotereinrichtung (1) nach Anspruch 1, wobei die Bewegungseinheit (9) ein Führungsteil (9a), das an jeder beweglichen Trägereinheit (7; 8) befestigt ist, und einen beweglichen Werkzeugbewegungskörper (12), der in Bezug auf das Führungsteil (9a) beweglich ist, umfasst, um die mindestens eine Werkzeugvorrichtung (5; 6) entlang der zweiten Arbeitsrichtung (Y) zu bewegen.

3. Robotereinrichtung (1) nach Anspruch 2, wobei das Führungsteil (9a) einen länglichen Körper umfasst, der sich in Längsrichtung entlang der zweiten Arbeitsrichtung (Y) erstreckt.

4. Robotereinrichtung (1) nach Anspruch 2 oder 3, wobei der bewegliche Werkzeugbewegungskörper (12) auf dem Führungsteil (9a) verschiebbar ist.

5. Robotereinrichtung (1) nach einem der Ansprüche 2 bis 4, wobei das erste Antriebsmittel (10) an dem beweglichen Werkzeugbewegungskörper (12) angebracht ist und konfiguriert ist, um den beweglichen Werkzeugbewegungskörper (12) anzutreiben.

6. Robotereinrichtung (1) nach einem der Ansprüche 2 bis 5, wobei die Bewegungseinheit (9) ein bewegliches Werkzeugträgerelement (9b) umfasst, das entlang der ersten Arbeitsrichtung (X) in Bezug auf den beweglichen Werkzeugbewegungskörper (12) beweglich ist, um die mindestens eine Werkzeugvorrichtung (5; 6) entlang der ersten Arbeitsrichtung (X) zu bewegen, um im Gebrauch die mindestens eine Werkzeugvorrichtung (5; 6) zu und/oder von dem zu wartenden elektronischen Bauteil (2a) und/oder dem Träger für elektronische Bauteile (2) zu bringen und/oder zu bewegen.

7. Robotereinrichtung (1) nach Anspruch 6, wobei das bewegliche Werkzeugträgerelement (9b) ein längliches Element umfasst, das sich in Längsrichtung entlang der ersten Arbeitsrichtung (X) erstreckt.

8. Robotereinrichtung (1) nach Anspruch 6 oder 7, wobei das bewegliche Werkzeugträgerelement (9b) verschiebbar an dem beweglichen Werkzeugbewegungskörper (12) angebracht ist.

9. Robotereinrichtung (1) nach einem der Ansprüche 6 bis 8, wobei ein zweites Antriebsmittel (11) an dem beweglichen Werkzeugbewegungskörper (12) angebracht ist und konfiguriert ist, um das bewegliche Werkzeugträgerelement (9b) anzutreiben.

10. Robotereinrichtung (1) nach einem der Ansprüche 2 bis 9, wobei die mindestens zwei Ständer (4a; 4b) nebeneinander und voneinander beabstandet angeordnet sind, wobei das Führungsteil (9a) an seinen Endabschnitten (9g, 9h) jeweils an jeder beweglichen Trägereinheit (7, 8) befestigt ist.

11. Robotereinrichtung (1) nach Anspruch 10, wobei nur eine von zwei beweglichen Trägereinheiten (7, 8) motorgetrieben ist.

12. Robotereinrichtung (1) nach Anspruch 11, wobei die Bewegungseinheit (9) ein weiteres Führungsteil (9c) umfasst, das sich im Wesentlichen parallel zu dem Führungsteil (9a) erstreckt, wobei weitere Endabschnitte (9i, 9j) des weiteren Führungsteils (9c) jeweils an jeder beweglichen Trägereinheit (7, 8) befestigt sind, wobei das weitere Führungsteil (9c) einen weiteren länglichen Körper umfasst.

13. Robotereinrichtung (1) nach einem der Ansprüche 2 bis 12, wobei die Bewegungseinheit (9) erste Führungs- und Haltemittel (9e, 12a; 9f, 12b) umfasst, die konfiguriert sind, um den beweglichen Werkzeugbewegungskörper (12) entlang der Arbeitsrichtung (Y) zu führen und den beweglichen Werkzeugbewegungskörper (12) in Bezug auf ein Führungsteil (9a) vertikal zu halten.

14. Robotereinrichtung (1) nach Anspruch 6 oder nach einem der Ansprüche 7 bis 13, wenn abhängig von Anspruch 6, wobei die Bewegungseinheit (9) zweite Führungs- und Haltemittel (12d, 12e) umfasst, die konfiguriert sind, um das bewegliche Werkzeugträgerelement (9b) entlang der weiteren Arbeitsrichtung (X) zu führen und das bewegliche Werkzeugträgerelement (9b) in Bezug auf den beweglichen Werkzeugbewegungskörper (12) vertikal zu halten.

15. Robotereinrichtung (1) nach einem der vorstehenden Ansprüche, wobei die mindestens eine Werkzeugvorrichtung (5; 6) eine Schraubvorrichtung (5) und/oder eine Extraktionsvorrichtung (K) zum Extrahieren eines Verbinders und/oder eine Betrachtungsvorrichtung und/oder eine Saugvorrichtung zum Absaugen des Staubs von dem zu wartenden elektronischen Bauteil (2a) und/oder eine Greifvorrichtung (6) zum Greifen eines Objekts in dem Arbeitsraum und/oder dem zu wartenden elektronischen Bauteil (2a) umfasst.

## Revendications

1. Appareil robotique (1) destiné à effectuer des tâches d'entretien sur un composant électronique à entretenir (2a), ledit composant électronique à entretenir (2a) étant monté sur un support pour composants électroniques (2) disposé dans une salle de travail, ledit appareil robotique (1) comprenant:
- une base mobile (3) conformée pour permettre audit appareil robotique (1) de se déplacer sur un sol (P) de ladite salle de travail pour atteindre ledit support pour composants électroniques (2),
- au moins deux montants (4a; 4b) s'étendant sensiblement verticalement à partir de ladite base mobile (3), où « verticalement » s'entend par rapport à un axe vertical (Z) qui est, en cours d'utilisation, sensiblement orthogonal audit sol (P),
- au moins un dispositif d'outil (5; 6) adapté pour effectuer une tâche d'entretien déterminée sur ledit composant électronique (2a) et/ou sur ledit support pour composants électroniques (2),
- au moins un dispositif de support et de déplacement d'outil (19) supportant une unité de déplacement (9), disposé pour supporter et déplacer ledit au moins un dispositif d'outil (5; 6) le long d'une première direction de fonctionnement (X) transversale audit axe vertical (Z) entre une configuration rétractée (L), dans laquelle ledit dispositif d'outil (5; 6), en cours d'utilisation, est plus éloigné dudit composant électronique à entretenir (2a), et une configuration de travail (W), dans laquelle ledit dispositif d'outil (5; 6), en cours d'utilisation, est plus proche dudit composant électronique à entretenir (2a), et comportant une unité de support mobile (7, 8) pour chacun desdits deux montants (4a; 4b) disposée pour supporter et déplacer ledit dispositif de support et de déplacement d'outil (19) le long dudit axe vertical (Z), ladite unité de support mobile (7; 8) pouvant coulisser le long d'un montant respectif desdits deux montants (4a; 4b) pour amener ledit dispositif de support et de déplacement d'outil (19) à une hauteur souhaitée,
dans lequel des premiers moyens d'entraînement (10) sont montés à bord de ladite unité de déplacement (9) pour déplacer ladite unité de déplacement (9) le long d'une deuxième direction de fonctionnement (Y) transversale à ladite première direction de fonctionnement (X) dans un espace défini entre lesdits deux montants (4a; 4b).

2. Appareil robotique (1) selon la revendication 1, dans lequel ladite unité de déplacement (9) comprend une partie de guidage (9a) fixée à chaque unité de support mobile (7; 8) et un corps mobile de déplacement d'outil (12) qui est mobile par rapport à ladite partie de guidage (9a) pour déplacer ledit au moins un dispositif d'outil (5; 6) le long de ladite deuxième direction de fonctionnement (Y).

3. Appareil robotique (1) selon la revendication 2, dans lequel ladite partie de guidage (9a) comprend un corps allongé qui s'étend longitudinalement le long de ladite deuxième direction de fonctionnement (Y).

4. Appareil robotique (1) selon la revendication 2 ou 3, dans lequel ledit corps mobile de déplacement d'outil (12) peut coulisser sur ladite partie de guidage (9a).

5. Appareil robotique (1) selon l'une quelconque des revendications 2 à 4, dans lequel lesdits premiers moyens d'entraînement (10) sont montés sur ledit corps mobile de déplacement d'outil (12) et conçus pour entraîner ledit corps mobile de déplacement d'outil (12).

6. Appareil robotique (1) selon l'une quelconque des revendications 2 à 5, dans lequel ladite unité de déplacement (9) comprend un élément de support d'outil mobile (9b) qui est mobile le long de ladite première direction de fonctionnement (X) par rapport audit corps mobile de déplacement d'outil (12) pour déplacer ledit au moins un dispositif d'outil (5; 6) le long de ladite première direction de fonctionnement (X) pour amener et/ou déplacer en cours d'utilisation ledit au moins un dispositif d'outil (5; 6) vers et/ou depuis le composant électronique à entretenir (2a) et/ou le support pour composants électroniques (2).

7. Appareil robotique (1) selon la revendication 6, dans lequel ledit élément de support d'outil mobile (9b) comprend un élément allongé qui s'étend longitudinalement le long de ladite première direction de fonctionnement (X).

8. Appareil robotique (1) selon la revendication 6 ou 7, dans lequel ledit élément de support d'outil mobile (9b) est monté coulissant sur ledit corps mobile de déplacement d'outil (12).

9. Appareil robotique (1) selon l'une des revendications 6 à 8, dans lequel des seconds moyens d'entraînement (11) sont montés sur ledit corps mobile de déplacement d'outil (12) et conçus pour entraîner ledit élément de support d'outil mobile (9b).

10. Appareil robotique (1) selon l'une quelconque des revendications 2 à 9, dans lequel lesdits au moins deux montants (4a; 4b) sont côte à côte et espacés l'un de l'autre, ladite partie de guidage (9a) étant fixée au niveau de ses parties d'extrémité (9g, 9h) à chaque unité de support mobile (7, 8) respectivement.

11. Appareil robotique (1) selon la revendication 10, dans lequel seule l'une de deux unités de support mobiles (7, 8) est motorisée.

12. Appareil robotique (1) selon la revendication 11, dans lequel ladite unité de déplacement (9) comprend une autre partie de guidage (9c) qui s'étend de manière sensiblement parallèle à ladite partie de guidage (9a), d'autres parties d'extrémité (9i, 9j) de ladite autre partie de guidage (9c) étant fixées à chaque unité de support mobile (7, 8) respectivement, ladite autre partie de guidage (9c) comprenant un autre corps allongé.

13. Appareil robotique (1) selon l'une quelconque des revendications 2 à 12, dans lequel ladite unité de déplacement (9) comprend des premiers moyens de guidage et de retenue (9e, 12a; 9f, 12b) conçus pour guider ledit corps mobile de déplacement d'outil (12) le long de ladite direction de fonctionnement (Y) et retenir verticalement ledit corps mobile de déplacement d'outil (12) par rapport à ladite partie de guidage (9a).

14. Appareil robotique (1) selon la revendication 6 ou selon l'une des revendications 7 à 13 lorsque dépendantes de la revendication 6, dans lequel ladite unité de déplacement (9) comprend des seconds moyens de guidage et de retenue (12d, 12e) conçus pour guider ledit élément de support d'outil mobile (9b) le long de ladite autre direction de fonctionnement (X) et retenir verticalement ledit élément de support d'outil mobile (9b) par rapport audit corps mobile de déplacement d'outil (12).

15. Appareil robotique (1) selon l'une quelconque des revendications précédentes, dans lequel ledit au moins un dispositif d'outil (5; 6) comprend un dispositif de vissage (5) et/ou un dispositif d'extraction (K) pour extraire un connecteur et/ou un dispositif de visualisation et/ou un dispositif d'aspiration pour aspirer la poussière dudit composant électronique à entretenir (2a) et/ou un dispositif de préhension (6) pour saisir un objet dans ladite salle de travail et/ou ledit composant électronique à entretenir (2a).
